(19) 

**Europäisches Patentamt**
**European Patent Office**
**Office européen des brevets**

(11) **EP 4 596 520 A1**

(12) **EUROPEAN PATENT APPLICATION**
published in accordance with Art. 153(4) EPC

(43) Date of publication:
**06.08.2025 Bulletin 2025/32**

(21) Application number: **23872528.7**

(22) Date of filing: **28.09.2023**

(51) International Patent Classification (IPC):
***C04B 35/486*** *(2006.01)*

(52) Cooperative Patent Classification (CPC):
**C04B 35/486; C04B 35/488**

(86) International application number:
**PCT/JP2023/035426**

(87) International publication number:
**WO 2024/071306 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022158849**

(71) Applicant: **Tosoh Corporation
Yamaguchi 746-8501 (JP)**

(72) Inventors:
• **NISHIYAMA, So**
**Shunan-shi Yamaguchi 746-8501 (JP)**
• **KAWAMURA, Kenta**
**Shunan-shi Yamaguchi 746-8501 (JP)**
• **NAGAYAMA, Hitoshi**
**Shunan-shi Yamaguchi 746-8501 (JP)**

(74) Representative: **Müller-Boré & Partner
Patentanwälte PartG mbB
Friedenheimer Brücke 21
80639 München (DE)**

(54) **SINTERED OBJECT**

(57) Provided is a zirconia sintered body having both good machinability and light shielding ability. The sintered body includes zirconia containing a stabilizing element, and the content of the stabilizing element is less than 3.0 mol%. The sintered body has a peak at $2\theta = 34.0°\pm0.2°$ in an XRD pattern.

EP 4 596 520 A1

**Description**

TECHNICAL FIELD

The present disclosure relates to a sintered body and more particularly to a sintered body formed mainly of zirconia and having high light shielding ability and high machinability.

BACKGROUND ART

It has been contemplated that a sintered body containing zirconia serving as a matrix may be applied to, in addition to conventional applications such as grinding mediums and structural materials that require strength, decorative applications such as decorative members for clocks, mobile electronic devices, automobiles, and household electrical appliances. Sintered bodies used for decorative applications are required to have high strength and high toughness in order to prevent fracture due to external shock. Various sintered bodies having high strength and high toughness have been reported as highly reliable materials.

Patent Document 1 reports a sintered body formed so as to contain a tetragonal zirconia composite powder containing 79.8 to 92 mol% of $ZrO_2$, 4.5 to 10.2 mol% of $Y_2O_3$ and 3.5 to 7.5 mol% of $Nb_2O_5$ or 5.5 to 10.0 mol% or $Ta_2O_5$ and a $TiO_2$ nanopowder contained in a mass ratio of 0% by mass or more and 2.5% by mass or less with respect to the mass of the zirconia composite powder. In the sintered body reported, the hardness of zirconia can be reduced while the high strength and high toughness are maintained, and therefore zirconia with good machinability can be provided. The zirconia sintered body in Patent Document 1 is a translucent zirconia sintered body having translucency.

PRIOR ART DOCUMENT

PATENT DOCUMENT

Patent Document 1: Japanese Unexamined Patent Application Publication No. 2015-127294

DISCLOSURE OF INVENTION

TECHNICAL PROBLEM

In recent years, there has been a demand for zirconia sintered bodies to have light shielding ability from the viewpoint of design characteristics as exterior components. It is generally known that the light shielding ability can be obtained by adding alumina to a zirconia sintered body during a normal pressure and temperature sintering process. However, as the amount of alumina contained increases, the hardness of the zirconia sintered body increases, and its machinability deteriorates.

It is an object of the present disclosure to provide a zirconia sintered body having both good machinability and light shielding ability.

SOLUTION TO PROBLEM

The present invention is as described in the claims, and the present disclosure is summarized as follows.

[1] A sintered body comprising zirconia containing at least one stabilizing element, wherein a content of the least one stabilizing element is less than 3.0 mol%, and wherein the sintered body has a peak at $2\theta = 34.0° \pm 0.2°$ in an XRD pattern.

[2] The sintered body according to [1], wherein the least one stabilizing element includes at least one selected from yttrium, gadolinium, ytterbium and erbium.

[3] The sintered body according to [1] or [2], wherein the least one stabilizing element includes yttrium and at least one selected from gadolinium, ytterbium and erbium.

[4] The sintered body according to any of [1] to [3], wherein the ratio of an intensity at $2\theta = 30.0° \pm 0.2°$ to a peak top intensity at $2\theta = 34.0° \pm 0.2°$ in the XRD pattern is 10 or more and 1000 or less.

[5] The sintered body according to any of [1] to [4], wherein the sintered body comprises aluminum and at least one selected from the group consisting of magnesium, calcium, strontium, barium, lanthanum, neodymium and samarium.

[6] The sintered body according to any of [1] to [5], wherein the sintered body has a Vickers hardness of 12.3 GPa or less.

[7] The sintered body according to any of [1] to [6], wherein the sintered body has a total light transmittance of 20% or less.

[8] The sintered body according to any of [1] to [7], wherein the sintered body has a measured density of 5.4 g/cm$^3$ or more and 6.3 g/cm$^3$ or less.

[9] The sintered body according to any of [1] to [8], wherein the sintered body comprises crystal particles of the zirconia and crystal particles of a dispersed phase, and wherein an average crystal particle size of the crystal particles of the zirconia is smaller than an average crystal particle size of the crystal particles of the dispersed phase.

[10] The sintered body according to any of [1] to [9], wherein the sintered body comprises crystal particles of a dispersed phase, and wherein the crystal particles of the dispersed phase have an average aspect ratio of 1.5 or more and 3.5 or less.

DESCRIPTION OF EMBODIMENTS

The sintered body of the present disclosure will be described using an example of an embodiment. Structures and parameters disclosed in the present description may be freely combined, and upper limits and lower limits disclosed in the present description may be freely combined.

A sintered body in the present embodiment comprises zirconia containing a stabilizing element. The content of the stabilizing element is less than 3.0 mol%, and the sintered body has a peak at $2\theta = 34.0°\pm0.2°$ in an XRD pattern.

The zirconia contained in the sintered body in the present embodiment contains the stabilizing element. Specifically, the zirconia contains the stabilizing element in an amount of more than 0 mol%. The stabilizing element is an element that stabilizes the zirconia, and examples thereof include rare-earth elements. The zirconia contained in the sintered body in the present embodiment contains preferably at least one stabilizing element selected from the group consisting of yttrium (Y), gadolinium (Gd), ytterbium (Yb) and erbium (Er), more preferably at least one stabilizing element selected from the group consisting of yttrium, gadolinium and ytterbium and still more preferably yttrium and gadolinium. Preferably, the rare-earth element includes yttrium because the sintered body can have high strength. Preferably, the rare-earth element includes gadolinium because sintering can be easily achieved even when the amount of the stabilizing element is small. Preferably, the rare-earth element includes ytterbium because the hydrothermal degradation resistance of the sintered body can be easily improved. The zirconia contained in the sintered body in the present embodiment may contain two or more rare-earth elements. The zirconia contained in the sintered body in the present embodiment contains preferably yttrium and at least one selected from the group consisting of gadolinium (Gd), ytterbium (Yb) and erbium (Er). For example, the zirconia contained in the sintered body in the present embodiment contains preferably yttrium and gadolinium. In this case, the strength of the sintered body is high, and the sintered body can be easily obtained through sintering using a small amount of the stabilizing elements.

It is only necessary that the content of the stabilizing element(s) (hereinafter referred to also as the "stabilizing element content") be such that the zirconia is partially stabilized. The stabilizing element content is the total content of one or more stabilizing elements contained in the sintered body. The stabilizing element content is more than 0 mol%, is 1.0 mol% or more or 1.4 mol% or more, is less than 3.0 mol%, is 2.9 mol% or less or 2.8 mol% or less, is more than 0 mol% and less than 3.0 mol% and is preferably more than 0 mol% and 2.9 mol% or less and more preferably 1.4 mol% or more and 2.8 mol% or less. In the present embodiment, the stabilizing element content is the ratio (mol%) of the total amount of the stabilizing element(s) in terms of oxide to the total amount of the zirconia and the stabilizing element(s) in terms of oxide. For example, in a sintered body including zirconia containing ytterbium and yttrium (ytterbium- and yttrium-stabilized zirconia sintered body), the stabilizing element content can be determined as $\{(Yb_2O_3 + Y_2O_3) / (Yb_2O_3 + Y_2O_3 + ZrO_2)\} \times 100$ (mol%).

The amount of a stabilizing element in terms of oxide is as follows. For example, the amount of $Y_2O_3$ is used for yttrium, and the amount of $Gd_2O_3$ is used for gadolinium. The amount of $Yb_2O_3$ is used for ytterbium, and the amount of $Er_2O_3$ is used for erbium.

In the sintered body in the present embodiment, the content of each stabilizing element (when the stabilizing element is, for example, ytterbium, the content of the stabilizing element is referred to also as the "ytterbium content") can be set freely so long as the stabilizing element content described above is met. As for the contents of the stabilizing elements in the sintered body in the present embodiment, the ytterbium content, the gadolinium content and the erbium content are each more than 0 mol%, 1.0 mol% or more or 1.4 mol% or more, are each less than 3.0 mol% or 2.0 mol% or less or are each more than 0 mol% and less than 3.0 mol%, 1.0 mol% or more and less than 3.0 mol% or 1.4 mol% or more and 2.0 mol% or less. The yttrium content is, for example, 0.1 mol% or more or 0.2 mol% or more, is less than 3.0 mol% or 2.0 mol% or less, is 0.1 mol% or more and less than 3.0 mol% or is 0.2 mol% or more and 2.0 mol% or less.

In the present embodiment, the content of each stabilizing element is the ratio (mol%) of the amount of the each stabilizing element in terms of oxide to the total amount of zirconia and the stabilizing element(s) in terms of oxide.

The sintered body in the present embodiment may contain a coloring component. In this case, the sintered body can have a color tone different from the original color tone of zirconia. The coloring component contained in the sintered body in the present embodiment is an element that has the function of coloring zirconia and that is other than rare earth elements. The coloring component is, for example, a metal element and is preferably a transition metal element. A specific coloring component is more preferably at least one selected from the group consisting of titanium (Ti), vanadium (V), chromium (Cr), manganese (Mn), iron (Fe), cobalt (Co), nickel (Ni), copper (Cu) and zinc (Zn) and is still more preferably at least one selected from the group consisting of iron, cobalt and zinc.

The coloring component contained in the sintered body in the present embodiment can be in any form. However, it is preferable that the coloring component is contained as a metal oxide having a perovskite structure or a spinel structure, and it is more preferable that the coloring component is contained as a transition metal oxide having a perovskite structure or a spinel structure.

The metal oxide having a perovskite structure is represented by $ABO_3$ and is an oxide in which A is at least one selected from the group consisting of calcium (Ca), strontium (Sr), barium (Ba) and bismuth (Bi) and in which B is at least one selected from the group consisting of vanadium, chromium, manganese, iron, cobalt, nickel and aluminum (Al).

The metal oxide having a spinel structure is represented by $AB_2O_4$ and is an oxide in which A and B are each at least one selected from the group consisting of calcium, strontium, barium, bismuth, vanadium, chromium, manganese, iron, cobalt, nickel and aluminum. This metal oxide is preferably an oxide represented by $AB_2O_4$.

Specifically, the metal oxide having a spinel structure is at least one selected from the group consisting of $CoAl_2O_4$, $Fe_3O_4$ and $Mn_3O_4$ (i.e., $Fe^{2+}Fe^{3+}_2O_4$ and $Mn^{2+}Mn^{3+}_2O_4$) and preferably at least one of $CoAl_2O_4$ and $Mn_3O_4$.

In the sintered body in the present embodiment, the smaller the content of the coloring component, the better, from the viewpoint of improving sinterability. The content of the coloring component is preferably more than 0% by mass and 0.001% by mass or more. The upper limit of the content of the coloring component is, for example, 5% by mass or less, 3.0% by mass or less, less than 3.0% by mass, 2.5% by mass or less, 2.0% by mass or less, 1.5% by mass or less, 1.0% by mass or less or 0.7% by mass or less. Moreover, the content of the coloring component is more than 0% by mass and 5% by mass or less, more than 0% by mass and 3.0% by mass or less, more than 0% by mass and 2.5% by mass or less, 0.001% by mass or more and 2.0% by mass or less, 0.001% by mass or more and 1.5% by mass or less, 0.001% by mass or more and 1.0% by mass or less or 0.001% by mass or more and 0.7% by mass or less. The coloring component content can be determined as the ratio of the total mass of the coloring component(s) in terms of oxide to the mass of the sintered body in terms of oxide. The mass of a coloring component in terms of oxide is as follows. For example, the mass of $Co_3O_4$ is used for cobalt, and the mass of $Fe_2O_3$ is used for iron. The mass of $MnO_2$ is used for manganese, and the mass of ZnO is used for zinc.

Preferably, the sintered body in the present embodiment contains a dispersed phase. The phrase "contains a dispersed phase" means that the sintered body contains a hexaaluminate of at least one metal element selected from the group consisting of at least magnesium, calcium, strontium, barium, lanthanum, neodymium and samarium (these are hereinafter referred to as "hexaaluminate source metal elements" or "dispersed phase metal elements"), and the sintered body may contain an aluminate of a dispersed phase metal element. When the sintered body in the present embodiment includes a dispersed phase, the total light transmittance decreases, and the light shielding ability is improved. In addition, the hardness decreases, and the machinability is improved.

A hexaaluminate of a dispersed phase metal element is hereinafter referred to simply as a "hexaaluminate," and an aluminate of a dispersed phase metal element is referred to simple as an "aluminate."

Preferably, the sintered body in the present embodiment contains a dispersed phase metal element and an aluminum metal element. It is only necessary that the content of the dispersed phase metal element be such that at least a hexaaluminate can be obtained. The content of the dispersed phase metal element (hereinafter, the content of the dispersed phase metal element when the dispersed phase metal element is, for example, magnesium is referred to also as the "magnesium content") is, for example, 0.001% by mass or more or 0.005% by mass or more, is 15% by mass or less or 10% by mass or less, is 0.001% by mass or more and 15% by mass or less or is 0.005% by mass or more and 10% by mass or less.

In particular, the magnesium content is, for example, 0.00618% by mass or more or 0.0618% by mass or more, is 1.85% by mass or less or 1.24% by mass or less, is 0.00618% by mass or more and 1.85% by mass or less or is 0.0618% by mass or more and 1.24% by mass or less. The calcium content is 0.00840% by mass or more or 0.0840% by mass or more, is 2.52% by mass or less or 1.68% by mass or less, is 0.00840% by mass or more and 2.52% by mass or less or is 0.0618% by mass or more and 1.68% by mass or less. The strontium content is 0.0145% by mass or more or 0.145% by mass or more, is 4.35% by mass or less or 2.90% by mass or less, is 0.0145% by mass or more and 4.35% by mass or less or is 0.145% by mass or more and 2.90% by mass or less. The barium content is 0.0200% by mass or more or 0.200% by mass or more, is 6.00% by mass or less or 4.00% by mass or less, is 0.0200% by mass or more and 6.00% by mass or less or is 0.200% by mass or more and 4.00% by mass or less. The lanthanum content is 0.0255% by mass or more or 0.255% by mass or more, is 6.75% by mass or less or 4.50% by mass or less, is 0.0255% by mass or more and 6.75% by mass or less or is 0.255% by mass or more and 4.50% by mass or less. The neodymium content is 0.0231% by mass or more or 0.231% by mass or more, is 6.93% by mass or less or 4.62% by mass or less, is 0.0231% by mass or more and 6.93% by mass or less or is 0.231% by mass or more and 4.62% by mass or less. The samarium content is 0.0237% by mass or more or 0.237% by mass or more, is 7.11% by mass or less or 4.74% by mass or less, is 0.0237% by mass or more and 7.11% by mass or less or is 0.237% by mass or more and 4.74% by mass or less.

The dispersed phase metal element content can be determined as the ratio of the total mass of the dispersed phase metal element(s) in terms of oxide to the mass of the sintered body in terms of oxide. The oxide of a dispersed phase metal element in terms of oxide is as follows. The mass of MgO is used for magnesium, and the mass of CaO is used for calcium. The mass of SrO is used for strontium, and the mass of BaO is used for barium. The mass of $La_2O_3$ is used for lanthanum, and the mass of $Nd_2O_3$ is used for neodymium. Moreover, the mass of $Sm_2O_3$ is used for samarium.

The aluminum content is, for example, 0.0763% by mass or more or 0.763% by mass or more, is 28.1% by mass or less or 18.8% by mass or less, is 0.0763% by mass or more and 28.1% by mass or less or is 0.763% by mass or more and 18.8% by mass or less. The aluminum content can be determined as the ratio of the total mass of aluminum in terms of oxide to the mass of the sintered body in terms of oxide. The mass of $Al_2O_3$ is used as the mass of aluminum in terms of oxide.

Preferably, the sintered body in the present embodiment contains a dispersed phase metal element and an aluminum element as at least a hexaaluminate. The term "aluminate" means an aluminum-containing compound that has a perovskite structure and belongs to the cubic system, and the term "hexaaluminate" means an aluminum-containing compound that has a layer structure and belongs to the hexagonal system. Examples of the layer structure include a β-alumina structure and a magnetoplumbite structure. For example, the sintered body in the present embodiment contains, as a hexaaluminate, at least one selected from the group consisting of $MgAl_{12}O_{19}$, $CaAl_{12}O_{19}$, $SrAl_{12}O_{19}$, $BaAl_{12}O_{19}$, $LaAl_{11}O_{18}$, $NdAl_{11}O_{18}$ and $SmAl_{11}O_{18}$ and contains preferably at least one selected from the group consisting of $MgAl_{12}O_{19}$, $CaAl_{12}O_{19}$, $SrAl_{12}O_{19}$, $BaAl_{12}O_{19}$ and $LaAl_{11}O_{18}$ or at least one selected from the group consisting of $CaAl_{12}O_{19}$, $SrAl_{12}O_{19}$ and $LaAl_{11}O_{18}$.

The sintered body in the present embodiment may contain, in addition to the hexaaluminate, a dispersed phase metal element and an aluminum element as a compound other than the hexaaluminate. Examples of the compound other than the hexaaluminate include magnesium aluminate, calcium aluminate, strontium aluminate, barium aluminate, lanthanum aluminate, neodymium aluminate and samarium aluminate.

The mass ratio of the hexaaluminate to the sintered body in the present embodiment (this mass ratio is hereinafter referred to also as the "hexaaluminate content") is preferably 1% by mass or more. The hexaaluminate content is more preferably 3% by mass or more or 5% by mass or more. The hexaaluminate content is preferably 25% by mass or less or 20% by mass or less, is 3% by mass or more and 25% by mass or less or is 5% by mass or more and 20% by mass or less.

In the present embodiment, the mass ratio of the hexaaluminate(s) is the ratio of the total mass of the hexaaluminate(s) to the mass of the sintered body in terms of oxide. When the dispersed phase metal elements are magnesium, calcium, strontium, barium, lanthanum, neodymium and samarium, the mass ratio of the hexaaluminates may be computed using the total mass of $MgAl_{12}O_{19}$, $CaAl_{12}O_{19}$, $SrAl_{12}O_{19}$, $BaAl_{12}O_{19}$, $LaAl_{11}O_{18}$, $NdAl_{11}O_{18}$ and $SmAl_{11}O_{18}$.

Preferably, the sintered body in the present embodiment is a so-called zirconia sintered body or a partially stabilized zirconia sintered body, each of which contains zirconia containing a stabilizing element and uses the stabilizing element-containing zirconia as a matrix (base material). The mass ratio of the stabilizing element-containing zirconia in the sintered body in the present embodiment (this mass ratio is hereinafter referred to also as the "zirconia content") is preferably 65% by mass or more, 70% by mass or more, more than 75% by mass, 80% by mass or more or 95% by mass or more. When the zirconia content is 65% by mass or more, mechanical strength such as three-point bending strength or fracture toughness is improved, and the hardness decreases, so that the machinability is improved. The zirconia content of the sintered body is 100% by mass or less. When the sintered body is formed only of the stabilizing element-containing zirconia, its zirconia content is 100% by mass. The zirconia content can be determined as the ratio of the total mass of zirconia and the stabilizing element(s) in terms of oxide to the mass of the sintered body in terms of oxide.

The sintered body in the present embodiment may contain incidental impurities such as hafnia ($HfO_2$), but it is preferable that the sintered body contains only the stabilizing element(s), zirconia, alumina, the dispersed phase and optionally contains a coloring component and incidental impurities. In the present embodiment, the contents of the components of the sintered body and values related to the composition may be computed with hafnia regarded as zirconia ($ZrO_2$).

For example, when the sintered body in the present embodiment is a zirconia sintered body containing a complex oxide represented by $ABO_3$ or $AB_2O_4$ as a coloring component, lanthanum hexaaluminate and alumina and further containing gadolinium and yttrium as stabilizing elements, the contents of the components may be determined as follows. In each of the following formulas, the mass of $HfO_2$ is included in the $ZrO_2$ term.

Coloring agent content [% by mass] = $\{(ABO_3 + AB_2O_4) / (Gd_2O_3 + Y_2O_3 + ZrO_2 + La_2O_3 + Al_2O_3 + ABO_3 + AB_2O_4)\} \times 100$

Aluminum content [% by mass] = $\{Al_2O_3 / (Gd_2O_3 + Y_2O_3 + ZrO_2 + La_2O_3 + Al_2O_3 + ABO_3 + AB_2O_4)\} \times 100$

Lanthanum content [% by mass] = $\{La_2O_3 / (Gd_2O_3 + Y_2O_3 + ZrO_2 + La_2O_3 + Al_2O_3 + ABO_3 + AB_2O_4)\} \times 100$

Stabilizing element content [mol%] = $\{(Gd_2O_3 + Y_2O_3) / (Gd_2O_3 + Y_2O_3 + ZrO_2)\} \times 100$

$$\text{Gadolinium content [mol\%]} = \{(Gd_2O_3) / (Gd_2O_3 + Y_2O_3 + ZrO_2)\} \times 100$$

$$\text{Yttrium content [mol\%]} = \{(Y_2O_3) / (Gd_2O_3 + Y_2O_3 + ZrO_2)\} \times 100$$

The sintered body in the present embodiment has a peak at $2\theta = 34.0° \pm 0.2°$ in an XRD pattern. The XRD pattern can be measured using a standard crystallinity analyzing X-ray diffractometer (for example, device name: X'pert PRO MPD manufactured by Spectris Co., Ltd.).
The measurement conditions may be as follows.
Radiation source: CuK$\alpha$ line ($\lambda$ = 1.5418 Å)
Tube voltage: 40 kV
Tube current: 40 mA
Scanning rate: 4°/minute
Step width: 0.02°
Measurement angle: 27 to 37°

After the measurement under the above measurement conditions, X-ray analysis software "SmartLab Studio II" can be used for analysis.
The analysis conditions (profile fitting conditions) are as follows.
Peak shape: split pseudo-Voigt function
Background type: B-spline
The analysis results can be used to examine the angle of each peak top and its intensity in the XRD pattern.

The ratio of the intensity at $2\theta = 30.0° \pm 0.2°$ to the peak top intensity at $2\theta = 34.0° \pm 0.2°$ in the XRD pattern (the ratio is hereinafter referred to also as the "XRD peak intensity ratio") is a value obtained by using the angles and heights of peak tops obtained from the analysis results, i.e., by dividing the peak intensity at $2\theta = 30.0° \pm 0.2°$ by the peak intensity at $2\theta = 34.0° \pm 0.2°$. From the viewpoint of machinability, the XRD peak intensity ratio is preferably 1000 or less, 800 or less or 500 or less. From the viewpoint of light shielding ability, the XRD peak intensity ratio is preferably 10 or more, 15 or more or 20 or more. The XRD peak intensity ratio is preferably 10 or more and 1000 or less, 15 or more and 800 or less or 20 or more and 500 or less. In this case, the obtained sintered body has both good light shielding ability and machinability.
It is preferable that the sintered body in the present embodiment has high density. Specifically, the measured density of the sintered body in the present embodiment is preferably 5.4 g/cm$^3$ or more and is more preferably 5.5 g/cm$^3$ or more or 5.6 g/cm$^3$ or more. The measured density of the sintered body in the present embodiment is, for example, 6.3 g/cm$^3$ or less or 6.2 g/cm$^3$ or less. The measured density is preferably 5.4 g/cm$^3$ or more and 6.3 g/cm$^3$ or less, 5.5 g/cm$^3$ or more and 6.2 g/cm$^3$ or less or 5.6 g/cm$^3$ or more and 6.2 g/cm$^3$ or less.
In the present embodiment, the measured density is a value determined as a mass per volume by mass measurement using a method according to JIS R 1634 (the so-called Archimedes method).
The crystal phase in the zirconia in the sintered body in the present embodiment contains preferably at least a tetragonal phase or may contain the tetragonal phase and at least one of a cubic phase and a monoclinic phase.
The shape of the sintered body in the present embodiment is at least one selected from the group consisting of a spherical shape, substantially spherical shapes, elliptical shapes, disk shapes, cylindrical shapes, a cubic shape, cuboidal shapes, polyhedral shapes and substantially polyhedral shapes. The sintered body may have any shape so long as the intended purpose such as the intended application can be achieved.
The Vickers hardness(Hv) of the sintered body in the present embodiment is preferably 12.3 GPa or less or 12 GPa or less. In this case, the machinability suitable for the intended application is improved. Specifically, grindability and cuttability are improved, and the occurrence of defects such as cracking and chipping during machining can be reduced. The Vickers hardness is preferably, for example, 9 GPa or more, more preferably 10 GPa or more and still more preferably 11 GPa or more because the surface of the sintered body resists scratching. The Vickers hardness is preferably 9 GPa or more and 12.3 GPa or less, 10 GPa or more and 12 GPa or less or 11 GPa or more and 12 GPa or less.

In the present embodiment, the Vickers hardness can be measured by a method according to JIS R 1610:2003. The measurement conditions for the Vickers hardness are, for example, as follows.

| | |
|---|---|
| Measurement specimen: | (specimen thickness) 1.5$\pm$0.5 mm |
| | (measurement surface roughness) Ra $\leq$ 0.02 $\mu$m |
| Measurement load: | 10 kgf |

The measurement can be performed using a standard Vickers hardness tester (for example, Q30A manufactured by Verder Scientific) equipped with a square pyramid indenter made of diamond. In the measurement, the indenter is statically pressed into the surface of the measurement specimen to form an indentation on the surface of the measurement specimen, and the diagonal length of the indentation is measured by visual inspection. The Vickers hardness can be computed from the following formula using the obtained diagonal length.

$$Hv = F / \{d^2 / 2\sin(\alpha / 2)\}$$

In the above formula, Hv is the Vickers hardness (GPa), and F is the measurement load (10 kgf). d is the diagonal length (mm) of the indentation, and $\alpha$ is the angle between the opposite faces of the indenter (136°).

In the present embodiment, the total light transmittance is preferably 20% or less and more preferably 15% or less. In this case, when the sintered body is used for the intended application, the sintered body is less susceptible to the color tone of the base. The total light transmittance is a total light transmittance (the sum of in-line transmittance and diffuse transmittance) measured using D65 as a light source as follows. The thickness of the sintered body is adjusted to $1\pm0.05$ mm. Then both surfaces of the sintered body are mirror-polished to a surface roughness of Ra $\leq$ 0.02 $\mu$m, and the total light transmittance is measured. When the total light transmittance is low, the obtained sintered body has high light shielding ability. The total light transmittance of the sintered body in the present embodiment is, for example, 1% or more or 3% or more. The total light transmittance is preferably 1% or more and 20% or less or 3% or more and 15% or less.

In the present embodiment, a fracture toughness value, for example, can be used as an indicator of the fracture resistance of the sintered body. The fracture toughness value is the value of fracture toughness (MPa·m$^{0.5}$) measured by a method specified in JIS R 1607. In JIS R 1607, two fracture toughness measurement methods, i.e., the IF method and the SEPB method, are specified. The IF method is a simple measurement method, but the values measured by this method tend to be larger than those measured by the SEPB method.

In the sintered body in the present embodiment, the fracture toughness value measured by the IF method is 10 MPa·m$^{0.5}$ or more or 11 MPa·m$^{0.5}$ or more or is 16 MPa·m$^{0.5}$ or less or 15 MPa·m$^{0.5}$ or less. The total light transmittance is 10 MPa·m$^{0.5}$ or more and 16 MPa·m$^{0.5}$ or less or is 11 MPa·m$^{0.5}$ or more and 15 MPa·m$^{0.5}$ or less.

The sintered body in the present embodiment contains crystal particles of the zirconia and crystal particles of the dispersed phase, and it is preferable that the average crystal particle size of the zirconia crystal particles is smaller than the average crystal particle size of the dispersed phase crystal particles. In this case, the dispersed phase crystal particles are unlikely to aggregate. Therefore, the mechanical strength tends to be improved, and the total light transmittance tends to decrease.

The average crystal particle size of the zirconia crystal particles is preferably 100 nm or more and 500 nm or less or is 200 nm or more and 400 nm or less.

The average crystal particle size of the dispersed phase crystal particles is preferably 100 nm or more and 800 nm or less or is 200 nm or more and 700 nm or less.

The average crystal particle size of the zirconia crystal particles and the average crystal particle size of the dispersed phase crystal particles are each an average size based on the number of crystal particles included in the sintered body and can be determined by image analysis of an SEM image obtained by observing the heat-treated and mirror-polished sintered body using a scanning electron microscope (hereinafter referred to also as an "SEM").

The SEM may be performed using a standard scanning electron microscope (for example, JSM-IT500LA manufactured by JEOL Ltd.). In the SEM performed, the observation magnification may be appropriately set such that the number of crystal particles used for the image analysis (crystal particles having crystal grain boundaries that are not discontinuous within the SEM image (these particles will be described later)) is 150$\pm$50. To reduce variations in the observed crystal particles in different SEM observation areas, it is preferable that the SEM images are obtained such that the total number of crystal particles observed in 2 or more, preferably 3 or more and 5 or less, SEM images is the above-described number of crystal particles. The SEM observation conditions are, for example, as follows.

Acceleration voltage: 5 to 15 kV
Observation magnification: 5000X to 40000X

The image analysis of the SEM images may be performed using image analysis software (such as Mac-View Ver. 5 manufactured by MOUNTECH). Specifically, crystal particles with grain boundaries that are not discontinuous within the observed SEM images are extracted, and the areas [nm$^2$] of the extracted crystal particles are determined. The determined areas are converted to the diameters [nm] of circles having the same areas as the determined areas, and the obtained diameters (Heywood diameters, which are hereinafter referred to as "equivalent circle diameters") may be regarded as the crystal particle diameters of the crystal particles. The average value of the equivalent circle diameters of the extracted crystal particles may be used as the average crystal particle size of the sintered body.

In the mirror-polished sintered body, it is difficult to perceive the contrast at the observed crystal boundaries, and it is therefore necessary to heat-treat the sintered body such that the size of the crystal particles is not changed.

The conditions for the heat treatment of the sintered body include, for example, holding the sintered body at a temperature lower by 50°C or more than the sintering temperature for 0.1 hours or longer, and examples of the conditions are as follows.

Heat treatment temperature: 1100°C or higher and 1500°C or lower
Heat treatment time: 0.1 hours or longer and 1.0 hours or shorter

A sintered body that contains a pigment component, alumina and hexaaluminate with the pigment component, alumina and hexaaluminate precipitated as crystal particles contains crystal particles of the pigment component, alumina crystal particles and dispersed phase crystal particles in an SEM image in addition to the zirconia crystal particles. In this case, the pigment component crystal particles, the alumina crystal particles and the dispersed phase crystal particles are observed as particles with a darker color than the zirconia crystal particles and can be detected by SEM-EDS. Therefore, the zirconia crystal particles and the dispersed phase crystal particles can be distinguished from each other, and their average crystal particle sizes can be computed independently. When the sintered body contains both hexaaluminate crystal particles and aluminate crystal particles, the average crystal particle size is computed with both of them considered as dispersed phase crystal particles.

The average aspect ratio of the dispersed phase crystal particles is preferably 1.5 or more, 1.8 or more, 1.9 or more or 2.0 or more and is preferably 3.5 or less, 3.0 or less or 2.8 or less. When the average aspect ratio is 1.5 or more, the dispersed phase crystal particles interrupt cracks, and the cracks tend not to propagate, so that the fracture toughness is likely to be improved. When the average aspect ratio is 3.5 or less, the dispersed phase crystal particles are unlikely to aggregate, and the bending strength is unlikely to decrease. The average aspect ratio is more preferably 1.5 or more and 3.5 or less or 1.8 or more and 3.0 or less.

The aspect ratio of each of the dispersed phase crystal particles is determined as follows. Specifically, dispersed phase crystal particles are extracted in the same manner as the measurement of the average crystal particle size described above. Then these crystal particles are approximated by ellipses, and the value of the long axis / short axis of each ellipse is computed. The average of the computed values is determined as the average aspect ratio.

The sintered body in the present embodiment can have any color tone. However, the lightness L* of a sintered body containing no coloring component in the CIE 1976 (L*a*b*) color space is, for example, 70 or more, 75 or more or 80 or more. The upper limit of the lightness L* is 100. Specifically, the lightness L* can be, for example, 70 or more and 100 or less, 75 or more and 100 or less or 80 or more and 100 or less.

In this case, the chroma a* can be, for example, $-3 \leq a^* \leq 1$, and the chroma b* can be, for example, $-2 \leq b^* \leq 5$.

The lightness L*, the chroma a* and the chroma b* can be measured using a standard spectrophotometer (such as CM-700d manufactured by KONICA MINOLTA, INC.) by a method according to JIS Z 8722. The following measurement conditions may be used to measure the lightness L*. Preferably, the measurement is performed using a black plate as the background (so-called black background measurement).

Light source: D-65
Viewing angle: 10°
Measurement method: SCI

The measurement specimen used is a disk-shaped sintered body having a diameter of 20 mm $\times$ a thickness of

2.7 mm. The surface to be evaluated is subjected to mirror polishing treatment (Ra ≤ 0.02 μm), and then the color tone is evaluated. The effective area for color tone evaluation is, for example, a diameter of 10 mm.

When the sintered body in the present embodiment contains a coloring component, the lightness L* is 0 or more and 95 or less. The chroma a* is -5 or more and 15 or less, and the chroma b* is -30 or more and 40 or less.

The sintered body in the present embodiment can be used for the applications of conventional sintered bodies, particularly the applications of zirconia sintered bodies such as structural materials, optical materials and dental materials. Moreover, the sintered body can also be used for members required to have relatively high light shielding ability such as covering applications for accessories such as ornaments, watches and casings and exterior parts of portable electronic devices such as mobile phones.

A method for producing the sintered body in the present embodiment will next be described.

No particular limitation is imposed on the method for producing the sintered body in the present embodiment. The sintered body in the present embodiment is obtained by a method including the step of sintering a powder mixture containing at least a zirconia powder, a stabilizing element source, an alumina source and a dispersed phase source (this step is hereinafter referred to also as a "sintering step"). When the powder mixture is sintered to produce the sintered body, the powder may be molded into a green body (green compact) before sintering.

The green body contains zirconia, the stabilizing element source, the alumina source and the dispersed phase source.

It is only necessary that the stabilizing element source be at least one of a compound containing the stabilizing element and a precursor of the compound containing the stabilizing element, and the compound containing the stabilizing element is preferably at least one selected from the group consisting of a chloride, sulfide, nitride, hydroxide and oxide of the stabilizing element. The content of the stabilizing element source in the green body may be the same as the target content of the stabilizing element in the sintered body.

The alumina source is at least one of alumina ($Al_2O_3$) and compounds each containing aluminum (Al) and serving as a precursor of alumina. The alumina source is at least one selected from the group consisting of aluminates, hexaaluminates, aluminum chloride, aluminum sulfate, aluminum nitrate, aluminum hydroxide and alumina and is preferably at least one selected from the group consisting of aluminates, hexaaluminates and alumina.

When the zirconia used is stabilizing element-containing zirconia, any method can be used to produce the zirconia containing the stabilizing element. For example, a hydrated zirconia sol and a stabilizing element source in an amount equal to the intended amount of the stabilizing element are mixed, dried, calcined and washed with water.

The green body may optionally contain a coloring component source (pigment).
It is only necessary that the content of the coloring component source in the green body be equivalent to the intended content of the coloring component in the sintered body. For example, a green body containing the coloring component source can be obtained by molding a powder mixture containing the above-described powder and the coloring component source into the green body.

Any method may be used to mix the powder and the coloring component source, and it is preferable to use at least one of dry mixing and wet mixing. It is more preferable to use wet mixing, and it is still more preferable to use wet mixing using a ball mill. The dispersed phase source is at least one of a hexaaluminate powder and a precursor of a hexaaluminate. The sintered body containing the hexaaluminate can be obtained by a production method including mixing the zirconia powder with the hexaaluminate powder or a powder of a precursor of the hexaaluminate and sintering the mixture. Specific examples of the production method include: a method including firing the powder of the precursor of the hexaaluminate to produce a hexaaluminate powder, mixing the hexaaluminate powder with the zirconia powder and then firing the resulting mixture; and a method including mixing the powder of the precursor of the hexaaluminate with the zirconia powder and then sintering the resulting powder.

The precursor of the hexaaluminate contains, for example, at least one of metal oxides (such as RO containing a metal element R and an oxygen atom O, $R_2O_3$ and mixtures thereof), alumina and aluminates and contains preferably a metal oxide and alumina.

The metal oxide contained in the precursor of the hexaaluminate is at least one selected from the group consisting of magnesium oxide (MgO), calcium oxide (CaO), strontium oxide (SrO), barium oxide (BaO), lanthanum oxide ($La_2O_3$), neodymium oxide ($Nd_2O_3$) and samarium oxide ($Sm_2O_3$). The aluminate is at least one selected from the group consisting of $MgAl_2O_4$, $CaAl_2O_4$, $SrAl_2O_4$, $BaAl_2O_4$, $LaAlO_3$, $NdAlO_3$ and $SmAlO_3$.

One method for producing the aluminate includes mixing the metal oxide and alumina such that the molar ratio of the metal R to Al is R:Al = 1:1, placing the powder mixture in an alumina sagger and firing the powder mixture at 1100°C or higher and 1250°C or lower for 2 hours or longer and 4 hours or shorter. One method for producing the hexaaluminate includes mixing the metal oxide and alumina such that the molar ratio of the metal R to Al is R:Al = 1:6, placing the powder mixture in an alumina sagger and firing the powder mixture at 1400°C or higher and 1500°C or lower for 4 hours or longer and 8 hours or shorter.

A well-known molding method may be used so long as the powder mixture can be formed into a compact. The molding method is preferably at least one selected from the group consisting of uniaxial compression molding, isotropic compression molding, injection molding, extrusion molding, tumbling granulation and cast molding, more preferably at least one of uniaxial compression molding and isotropic compression molding, still more preferably at least one of cold isostatic pressing and uniaxial compression molding (powder press molding) and yet more preferably a method including uniaxial compression molding followed by cold isostatic pressing.

In the sintering step, the above-described powder mixture, preferably a green body, is sintered to obtain the sintered body. Any sintering method can be used, and example of the sintering method include well-known sintering methods such as pressureless sintering, pressure sintering and vacuum sintering. The sintering method is preferably pressureless sintering, and it is preferable that the sintering method includes only pressureless sintering. In this case, the sintered body in the present embodiment can be obtained as a so-called pressureless sintered body. The pressureless sintering is a sintering method in which an article to be sintered (a powder, a green body or a calcined body) is sintered simply by heating without application of an external force.

The conditions for the pressureless sintering are as follows. The sintering temperature is preferably 1100°C or higher and 1600°C or lower, 1200°C or higher and 1580°C or lower or 1200°C or higher and 1560°C or lower or is, for example, 1200°C or higher and 1500°C or lower or 1200°C or higher and 1450°C or lower. The sintering atmosphere is at least one of an air atmosphere and an oxygen atmosphere and is preferably an air atmosphere.

The sintering time may be appropriately adjusted according to the sintering method, the size and amount of the powder (green body) used for the sintering and the type and performance of the sintering furnace used. The sintering time is, for example, 0.5 hours or longer and 8 hours or shorter.

The embodiment of the present disclosure has been described, but the present disclosure is not limited to the embodiment. For example, a numerical range obtained by combining an upper limit and a lower limit specifically described in the embodiment is also included in the present disclosure. A range obtained by replacing at least one of an upper limit and a lower limit with a value in the following Examples is also included in the present disclosure.

EXAMPLES

The embodiment will be specifically described by way of Examples. However, the embodiment is not limited to these Examples.

(Powder X ray diffraction measurement)

Sintered bodies in Examples and Comparative Examples were each subjected to X ray diffraction measurement under conditions below, and the XRD pattern obtained was analyzed using X ray analysis software "SmartLab Studio II."

Each of the sintered body specimen used was a disk-shaped specimen having a diameter of 20 mm × a thickness of 1.7 mm. The surface of the sintered body specimen was mirror-polished to a surface roughness of $Ra \leq 0.02 \ \mu m$ to obtain a measurement surface.

The measurement conditions are as follows.

Radiation source: CuKα line ($\lambda$ = 1.5418 Å)
Tube voltage: 40 kV
Tube current: 40 mA
Scanning rate: 4°/minute
Step width: 0.02°
Measurement angle: 27 to 37°

The analysis conditions (profile fitting conditions) are as follows.

Peak shape: split pseudo-Voigt function
Background type: B-spline

(Vickers hardness)

The Vickers hardness was measured using a standard Vickers hardness tester (Q30A manufactured by Verder Scientific) equipped with a square pyramid indenter made of diamond. The Vickers hardness measurement conditions are as follows.

| Measurement specimen: | (specimen thickness) 1.5±0.5 mm |
| | (measurement surface roughness) Ra ≤ 0.02 μm |
| Measurement load: | 10 kgf |

The indenter was statically pressed into the surface of the measurement specimen to form an indentation on the surface of the measurement specimen, and the diagonal length of the indentation was measured by visual inspection. The Vickers hardness was determined from the following formula using the obtained diagonal length.

$$Hv = F / \{d^2 / 2\sin(\alpha / 2)\}$$

(Density)

The measured density of the sintered body specimen was determined as the ratio ($g/cm^3$) of the volume measured by the Archimedes method according to JIS R 1634 to the mass measured by mass measurement. Before the measurement, pretreatment was performed. Specifically, the mass of the dried sintered body was measured, and then the sintered body was immersed in water and then boiled for 1 hour.

(Total light transmittance)

The total light transmittance of the sintered body specimen was measured by a method according to JIS K 7361-1. The measurement was performed using a standard haze meter (device name: NDH4000 manufactured by NIPPON DENSHOKU INDUSTRIES Co., Ltd.) equipped with a D65 light source. The sintered body specimen used had a thickness of 1 mm±0.05 mm and a diameter of 20 mm, and both sides of the specimen were mirror-polished such that the surface roughness was Ra ≤ 0.02 μm.

(Average crystal particle size)

The average crystal particle size of a specimen prepared by thermally etching a mirror polished sintered body was determined by the above-described method using an SEM-EDS (device name: JSM-IT500LA manufactured by JEOL Ltd.) and image analysis software (software name: Mac-View Ver. 5 manufactured by MOUNTECH). In the thermal etching, heat treatment was performed at a temperature lower by 100°C than the sintering temperature of the sintered body for 0.5 hours. The thermally etched specimen was coated with Au using a vapor deposition apparatus for SEM (DII-29010SCTRSmart Coater manufactured by JEOL Ltd.), and then SEM observation was performed.

The average crystal particle size of the zirconia crystal particles was determined as follows. The grain boundaries of the zirconia crystal particles in an SEM image captured by the image analysis software were traced using the software, and crystal particles with grain boundaries that were not discontinuous were extracted. After the extraction, the image analysis software was used to determine the areas and equivalent circle diameters of the crystal particles, and then the average crystal particle size was determined. In a sintered body containing the pigment component and alumina hexaaluminate with the pigment component, alumina and the dispersed phase precipitated as crystal particles, pigment component crystal particles, alumina crystal particles and dispersed phase crystal particles are contained in the SEM image in addition to the zirconia crystal particles. In this case, the observed color tones of the pigment component crystal particles, the alumina crystal particles and the dispersed phase crystal particles are more blackish than the color tone of the zirconia crystal particles, and they can be detected by SEM-EDS. Therefore, with such crystal particles eliminated, 150 ±50 crystal particles were extracted. Then the areas and equivalent circle diameters of the crystal particles were determined, and the average crystal particle size was determined.

The average crystal particle size of the dispersed phase crystal particles was measured according to the same procedure as that for the average crystal particle size of the zirconia crystal particles. Specifically, the grain boundaries of the dispersed phase crystal particles were traced using the software, and crystal particles with grain boundaries that were not discontinuous were extracted. The dispersed phase crystal particles were detected and extracted by SEM-EDS. Then the areas and equivalent circle diameters of the crystal particles were determined using the software, and the average crystal particle size was determined. 150±50 crystal particles were extracted.

(Average aspect ratio)

The average aspect ratio of the dispersed phase crystal particles was computed as follows. Specifically, all the dispersed phase crystal particles extracted for the measurement of the average crystal particle size were approximated by ellipses, and the value of the long axis / short axis of each ellipse was computed. The average of the computed values was determined as the average aspect ratio.

(Pigments)

In Example 4, the following pigments containing coloring components were used.
Pigment 1: $CoAl_2O_4$ (NF-2800, NIKKEN Co., Ltd.)
Pigment 2: $Fe_2O_3$ (iron oxide(III), First grade, KANTO CHEMICAL Co., Inc.)
Pigment 3: ZnO (zinc oxide, Special grade, KISHIDA CHEMICAL Co., Ltd.) Synthesis Example 1 (strontium hexaaluminate)

In Example 5, strontium hexaaluminate produced according to the following procedure was used.
Strontium oxide (manufactured by KISHIDA CHEMICAL Co., Ltd.) and alumina (AKP30 manufactured by Sumitomo Chemical Co., Ltd.) were mixed such that Sr:Al = 1:6 in terms of moles, and the mixture was added to pure water to obtain a slurry. The slurry was ground and stirred in a ball mill using 10 mm-diameter zirconia balls as a grinding medium for 24 hours. The ground slurry was dried in an air atmosphere at 110°C, and aggregates having an aggregation diameter of larger than 180 $\mu$m were removed by sieving. A powder mixture was thereby obtained. The powder mixture was heated in an alumina sagger at 1450°C for 6 hours to thereby obtain a strontium hexaaluminate powder used in Example 5.

Synthesis Example 2 (lanthanum aluminate)

In Example 6, lanthanum aluminate produced according to the following procedure was used.
Lanthanum oxide (manufactured by Nippon Yttrium Co., Ltd.) was treated in an air atmosphere at 700°C, and the resulting lanthanum oxide and alumina (AKP30 manufactured by Sumitomo Chemical Co., Ltd.) were mixed such that La:Al = 1:1 in terms of moles to thereby obtain a powder mixture. The obtained powder mixture was heat-treated in an air atmosphere at 1450°C for 2 hours and then cooled to room temperature. After the cooling, the powder mixture was ground and stirred, and the resulting mixture was heated in an air atmosphere at 1450°C for 2 hours to thereby obtain a lanthanum aluminate powder used in Example 6.

Synthesis Example 3 (calcium hexaaluminate)

In Examples 8, 9 and 10 and Comparative Examples 4 and 5, calcium hexaaluminate produced according to the following procedure was used.
Calcium oxide (manufactured by FUJIFILM Wako Pure Chemical Corporation) and alumina (AKP30 manufactured by Sumitomo Chemical Co., Ltd.) were mixed such that Ca:Al = 1:6 in terms of moles, and the mixture was added to pure water to obtain a slurry. The slurry was ground and stirred in a ball mill using 10 mm-diameter zirconia balls as a grinding medium for 24 hours. The ground slurry was dried in an air atmosphere at 110°C, and aggregates having an aggregation diameter of larger than 180 $\mu$m were removed by sieving. A powder mixture was thereby obtained. The powder mixture was heated in an alumina sagger at 1450°C for 6 hours to thereby obtain a calcium hexaaluminate powder used in Example 8.

Example 1

An aqueous zirconium oxychloride solution was hydrolyzed to obtain a hydrated zirconia sol. Gadolinium chloride and yttrium chloride were added to and mixed with the hydrated zirconium such that the concentration of gadolinium was 1.4 mol% and the concentration of yttrium was 0.4 mol%. After the mixing, the mixture was dried in an air atmosphere and then calcined at 1150°C for 2 hours in an air atmosphere to thereby obtain a gadolinium- and yttrium-stabilized zirconia calcined powder. The obtained calcined powder was washed with pure water and dried to obtain a zirconia powder containing gadolinium- and yttrium-stabilized zirconia with a gadolinium content of 1.4 mol% and an yttrium content of 0.4 mol%.
The obtained zirconia powder was mixed with a strontium oxide powder (manufactured by KISHIDA CHEMICAL Co., Ltd.) and alumina (AKP30 manufactured by Sumitomo Chemical Co., Ltd.) such that the strontium oxide content was 1.45% by mass and the alumina content was 8.55% by mass to thereby obtain a powder mixture. The powder mixture was added to pure water to prepare a slurry, and the resulting slurry was ground and stirred for 48 hours in a ball mill using 10 mm-diameter zirconia balls as a grinding medium. The ground slurry was dried in an air atmosphere at 110°C, and then coarse particles with an aggregation diameter of more than 180 $\mu$m were removed by sieving to thereby obtain a powder mixture in the present Example including gadolinium- and yttrium-stabilized zirconia, containing strontium oxide and alumina and having a strontium content of 1.45% by mass, an alumina content of 8.55% by mass, a gadolinium content of 1.4 mol% and an yttrium content of 0.4 mol%.

The obtained powder mixture was subjected to mold pressing at a pressure of 50 MPa and cold isostatic pressing (CIP) at a pressure of 196 MPa to thereby obtain a green body. The obtained green body was subjected to pressureless sintering in an air atmosphere at a sintering temperature of 1450°C for 2 hours to thereby obtain a sintered body in the present Example including the gadolinium- and yttrium-stabilized zirconia, containing strontium hexaaluminate and having a strontium content of 1.45% by mass, an aluminum content of 8.55% by mass, a gadolinium content of 1.4 mol%, and an yttrium content of 0.4 mol%. The Vickers hardness of the obtained sintered body was 11.6 GPa, and the total light transmittance was 7%.

Example 2

The same procedure as in Example 1 was repeated except that a powder mixture was produced by mixing the zirconia powder, the strontium oxide powder and the aluminum oxide powder such that the strontium oxide content was 0.724% by mass and the aluminum oxide content was 4.28% by mass, to thereby obtain a sintered body in the present Example including gadolinium- and yttrium-stabilized zirconia, containing strontium hexaaluminate and having a strontium content of 0.724% by mass, an aluminum content of 4.28% by mass, a gadolinium content of 1.4 mol% and an yttrium content of 0.4 mol%. The Vickers hardness of the obtained sintered body was 11.3 GPa, and the total light transmittance was 15%.

Example 3

The same procedure as in Example 1 was repeated except that a powder mixture to be sintered was produced by mixing the zirconia powder, the strontium oxide powder and the aluminum oxide powder such that the strontium oxide content was 2.17% by mass and the aluminum oxide content was 12.8% by mass, to thereby obtain a sintered body in the present Example including gadolinium- and yttrium-stabilized zirconia, containing strontium hexaaluminate and having a strontium content of 2.17% by mass, an aluminum content of 12.8% by mass, a gadolinium content of 1.4 mol% and an yttrium content of 0.4 mol%. The Vickers hardness of the obtained sintered body was 11.7 GPa, and the total light transmittance was 4%.

Example 4

The same procedure as in Example 1 was repeated except that a powder mixture was produced by mixing the zirconia powder, the strontium oxide powder, the aluminum oxide powder and the coloring components 1 to 3 such that the strontium oxide content was 1.45% by mass, that the aluminum oxide content was 8.55% by mass, that the $CoAl_2O_4$ content was 0.0100% by mass, that the $Fe_2O_3$ content was 0.0200% by mass and that the ZnO content was 0.0125% by mass, to thereby obtain a sintered body in the present Example including gadolinium- and yttrium-stabilized zirconia, containing strontium hexaaluminate, cobalt aluminate, iron oxide and zinc oxide and having a strontium content of 1.45% by mass, an aluminum content of 8.55% by mass, a $CoAl_2O_4$ content of 0.0100% by mass, an $Fe_2O_3$ content of 0.0200% by mass, a ZnO content of 0.0125% by mass, a gadolinium content of 1.4 mol% and an yttrium content of 0.4 mol%. The Vickers hardness of the obtained sintered body was 11.6 GPa, and the total light transmittance was 2%.

Example 5

The same procedure as in Example 1 was repeated except that a powder mixture was produced by mixing the zirconia powder and the strontium hexaaluminate powder in Synthesis Example 1 such that the strontium hexaaluminate content was 5.00% by mass, to thereby obtain a sintered body in the present Example including gadoliniumand yttrium-stabilized zirconia and having a strontium hexaaluminate content of 5.00% by mass, a gadolinium content of 1.4 mol% and an yttrium content of 0.4 mol%. The Vickers hardness of the obtained sintered body was 11.5 GPa, and the total light transmittance was 9%.

Example 6

The same procedure as in Example 1 was repeated except that a powder mixture was produced by mixing the zirconia powder, the lanthanum aluminate powder in Synthesis Example 2 and the aluminum oxide powder such that the lanthanum aluminate content was 2.96% by mass, that the alumina content was 7.04% by mass and that the sintering temperature was changed to 1400°C, to thereby obtain a sintered body in the present Example including gadolinium- and yttrium-stabilized zirconia, containing lanthanum hexaaluminate and having a lanthanum content of 2.25% by mass, an aluminum content of 7.75% by mass, a gadolinium content of 1.4 mol% and an yttrium content of 0.4 mol%. The Vickers hardness of the obtained sintered body was 12.2 GPa, and the total light transmittance was 8%.

Example 7

The same procedure as in Example 1 was repeated except that a powder mixture to be sintered was produced by mixing the zirconia powder, a calcium oxide powder (Manufactured by FUJIFILM Wako Pure Chemical Corporation) and the alumina such that the calcium oxide content was 0.840% by mass and the alumina was 9.16% by mass and that the sintering temperature was changed to 1400°C, to thereby obtain a sintered body in the present Example including gadolinium- and yttrium-stabilized zirconia, containing calcium hexaaluminate and having a calcium content of 0.840% by mass, an aluminum content of 9.16% by mass, a gadolinium content of 1.4 mol% and an yttrium content of 0.4 mol%. The Vickers hardness of the obtained sintered body was 11.5 GPa, and the total light transmittance was 6%.

Example 8

The same procedure as in Example 1 was repeated except that a powder mixture to be sintered was produced by mixing the zirconia powder and the calcium hexaaluminate powder in Synthesis Example 3 such that the calcium hexaaluminate content was 10.0% by mass and that the sintering temperature was changed to 1400°C, to thereby obtain a sintered body in the present Example including gadolinium- and yttrium-stabilized zirconia and having a calcium hexaaluminate content of 10.0% by mass, a gadolinium content of 1.4 mol% and an yttrium content of 0.4 mol%. The Vickers hardness of the obtained sintered body was 11.9 GPa, and the total light transmittance was 6%.

Example 9

The same procedure as in Example 1 was repeated except that gadolinia was added to and mixed with hydrated zirconium such that the gadolinium concentration was 1.6 mol%, that a powder mixture was produced by mixing the zirconia powder and the calcium hexaaluminate powder in Synthesis Example 3 such that the calcium hexaaluminate content was 10.0% by mass and that the sintering temperature was changed to 1350°C, to thereby obtain a sintered body in the present Example including gadolinium- and yttrium-stabilized zirconia and having a calcium hexaaluminate content of 10.0% by mass and a gadolinium content of 1.6 mol%. The Vickers hardness of the obtained sintered body was 11.3 GPa, and the total light transmittance was 14%.

Example 10

The same procedure as in Example 1 was repeated except that gadolinia and yttria were added to and mixed with hydrated zirconium such that the gadolinium concentration was 1.7 mol% and the yttrium concentration was 1.1 mol% and that a powder mixture was produced by mixing the obtained zirconia powder and the calcium hexaaluminate powder in Synthesis Example 3 such that the calcium hexaaluminate content was 15.0% by mass, to thereby obtain a sintered body in the present Example including gadolinium- and yttrium-stabilized zirconia and having a calcium hexaaluminate content of 15.0% by mass, a gadolinium content of 1.7 mol% and an yttrium content of 1.1 mol%. The Vickers hardness of the obtained sintered body was 10.7 GPa, and the total light transmittance was 4%.

Example 11

The same procedure as in Example 1 was repeated except that yttria was added to and mixed with hydrated zirconium such that the yttrium concentration was 1.5 mol%, that a powder mixture was produced by mixing the obtained zirconia powder and the strontium hexaaluminate powder in Synthesis Example 1 such that the strontium hexaaluminate content was 5.0% by mass and that the sintering temperature was changed to 1400°C, to thereby obtain a sintered body in the present Example including yttrium-stabilized zirconia and having a strontium hexaaluminate content of 5.0% by mass and an yttrium content of 1.5 mol%. The Vickers hardness of the obtained sintered body was 11.5 GPa, and the total light transmittance was 8%.

Comparative Example 1

The same procedure as in Example 1 was repeated except that a powder mixture was produced by mixing the zirconia powder and the alumina powder such that the alumina content was 10.0% by mass, to thereby obtain a sintered body in the present Comparative Example including gadolinium- and yttrium-stabilized zirconia and having an alumina content of 10.0% by mass, a gadolinium content of 1.4 mol% and an yttrium content of 0.4 mol%. The Vickers hardness of the obtained sintered body was 12.4 GPa, and the total light transmittance was 7%.

Comparative Example 2

The same procedure as in Example 1 was repeated except that yttria was added to and mixed with hydrated zirconium such that the yttrium concentration was 2.0 mol% and that a powder mixture was produced by mixing the zirconia powder and the alumina powder such that the alumina content was 10% by mass, to thereby obtain a sintered body in the present Comparative Example including gadolinium- and yttrium-stabilized zirconia and having an alumina content of 10.0% by mass and an yttrium content of 2.0 mol%. The Vickers hardness of the obtained sintered body was 12.8 GPa, and the total light transmittance was 7%.

Comparative Example 3

The same procedure as in Example 1 was repeated except that gadolinia and yttria were added to and mixed with hydrated zirconium such that the gadolinium concentration was 1.5 mol% and the yttrium concentration was 0.5 mol% and that a powder mixture was produced by mixing the zirconia powder and the strontium oxide powder such that the strontium oxide content was 1.45% by mass, to thereby obtain a sintered body in the present Comparative Example including gadolinium- and yttrium-stabilized zirconia, containing strontium oxide and having a strontium content of 1.45% by mass, a gadolinium content of 1.5 mol% and an yttrium content of 0.5 mol%. The Vickers hardness of the obtained sintered body was 11.0 GPa, and the total light transmittance was 25%.

Comparative Example 4

The same procedure as in Example 1 was repeated except that gadolinia was added to and mixed with hydrated zirconium such that the gadolinium concentration was 3.5 mol% and that a powder mixture was produced by mixing the zirconia powder and the calcium hexaaluminate such that the calcium hexaaluminate content was 15.0% by mass, to thereby obtain a sintered body including gadolinium-stabilized zirconia and having a calcium hexaaluminate content of 15.0% by mass and a gadolinium content of 3.5 mol%. The Vickers hardness of the obtained sintered body was 12.4 GPa, and the total light transmittance was 5%.

Comparative Example 5

The same procedure as in Example 1 was repeated except that yttria was added to and mixed with hydrated zirconium such that the yttrium concentration was 3.0 mol% and that a powder mixture was produced by mixing the obtained zirconia powder and the calcium hexaaluminate such that the calcium hexaaluminate content was 15.0% by mass, to thereby obtain a sintered body including yttrium-stabilized zirconia, containing calcium hexaaluminate and having a calcium hexaaluminate content of 15.0% by mass and an yttrium content of 3.0 mol%. The Vickers hardness of the obtained sintered body was 12.5 GPa, and the total light transmittance was 4%.

The compositions of the sintered bodies in the Examples and Comparative Examples and the sintering temperature are shown in Table 1, and the evaluation results are shown in Table 2.

[Table 1]

| | Content of stabilizing element [mol%] | | | Additive [wt%] | | | | | | | | | Al content [wt%] | Sintering temperature [°C] |
|---|---|---|---|---|---|---|---|---|---|---|---|---|---|---|
| | $Y_2O_3$ | $Gd_2O_3$ | Total | $Al_2O_3$ | SrO | $CoAl_2O_4$ | $Fe_2O_3$ | ZnO | $SrAl_{12}O_{19}$ | $LaAlO_3$ | CaO | $CaAl_{12}O_{19}$ | | |
| Example 1 | 0.4 | 1.4 | 1.8 | 8.55 | 1.45 | - | - | - | - | - | - | - | 8.55 | 1450 |
| Example 2 | 0.4 | 1.4 | 1.8 | 4.28 | 0.724 | - | - | - | - | - | - | - | 4.28 | 1450 |
| Example 3 | 0.4 | 1.4 | 1.8 | 12.8 | 2.17 | - | - | - | - | - | - | - | 12.8 | 1450 |
| Example 4 | 0.4 | 1.4 | 1.8 | 8.55 | 1.45 | 0.0100 | 0.0200 | 0.0125 | - | - | - | - | 8.55 | 1450 |
| Example 5 | 0.4 | 1.4 | 1.8 | - | - | - | - | - | 5.00 | - | - | - | 4.28 | 1450 |
| Example 6 | 0.4 | 1.4 | 1.8 | 7.04 | - | - | - | - | - | 2.96 | - | - | 7.75 | 1400 |
| Example 7 | 0.4 | 1.4 | 1.8 | 9.16 | - | - | - | - | - | - | 0.840 | - | 9.16 | 1400 |
| Example 8 | 0.4 | 1.4 | 1.8 | - | - | - | - | - | - | - | - | 10.0 | 9.16 | 1400 |
| Example 9 | - | 1.6 | 1.6 | - | - | - | - | - | - | - | - | 10.0 | 9.16 | 1350 |
| Example 10 | 1.1 | 1.7 | 2.8 | - | - | - | - | - | - | - | - | 15.0 | 13.7 | 1450 |
| Example 11 | 1.5 | - | 1.5 | - | - | - | - | - | 5.00 | - | - | - | 4.28 | 1400 |
| Comparative Example 1 | 0.4 | 1.4 | 1.8 | 10.0 | - | - | - | - | - | - | - | - | 10.0 | 1450 |
| Comparative Example 2 | 2.0 | - | 2.0 | 10.0 | - | - | - | - | - | - | - | - | 10.0 | 1450 |
| Comparative Example 3 | 0.5 | 1.5 | 2.0 | - | 1.45 | - | - | - | - | - | - | - | - | 1450 |
| Comparative Example 4 | - | 3.5 | 3.5 | - | - | - | - | - | - | - | - | 15.0 | 13.7 | 1450 |
| Comparative Example 5 | 3.0 | - | 3.0 | - | - | - | - | - | - | - | - | 15.0 | 13.7 | 1450 |

[Table 2]

| | Measured density [g/cm³] | Vickers hardness [GPa] | Total light transmittance [%] | XRD peak intensity ratio | Zr particle size [m,] | Dispersed phase particle size [nm] | Average aspect ratio |
|---|---|---|---|---|---|---|---|
| Example 1 | 5.86 | 11.6 | 7 | 51 | 341 | 496 | 2.16 |
| Example 2 | 6.01 | 11.3 | 15 | 48 | 345 | 481 | 1.70 |
| Example 3 | 5.67 | 11.7 | 4 | 36 | 345 | 557 | 2.87 |
| Example 4 | 5.89 | 11.6 | 2 | 45 | 350 | 657 | 3.17 |
| Example 5 | 6.00 | 11.5 | 9 | 69 | 310 | 477 | 2.57 |
| Example 6 | 5.97 | 12.2 | 8 | 437 | 231 | 336 | 1.50 |
| Example 7 | 5.78 | 11.5 | 6 | 128 | 225 | 343 | 2.78 |
| Example 8 | 5.80 | 11.9 | 6 | 76 | 264 | 347 | 1.94 |
| Example 9 | 6.06 | 11.3 | 14 | 136 | 201 | 214 | 1.54 |
| Example 10 | 5.40 | 10.7 | 4 | 80 | 234 | 538 | 2.16 |
| Example 11 | 5.93 | 11.5 | 8 | 397 | 295 | 356 | 2.87 |
| Comparative Example 1 | 5.85 | 12.4 | 7 | - | 291 | 334 | 1.28 |
| Comparative Example 2 | 5.78 | 12.8 | 7 | - | 356 | 300 | 1.34 |
| Comparative Example 3 | 6.20 | 11.0 | 25 | - | 360 | - | - |
| Comparative Example 4 | 5.64 | 12.4 | 5 | 72 | 253 | 419 | 1.72 |
| Comparative Example 5 | 5.47 | 12.5 | 4 | 91 | 242 | 366 | 1.81 |

In Table 1, the "Al content" column represents the aluminum content. The "Zr particle size" column represents the average crystal particle size of the zirconia crystal particles, and the "Dispersed phase particle size" column represents the average crystal particle size of the dispersed phase crystal particles. In the "Content of stabilizing element" column and the "Additive" column, a compound not used as a raw material is indicated by "-." When the peak at 34.0°±0.2° was not detected in the XRD analysis, "-" was placed in the "XRD peak intensity ratio" column. For Comparative Example 3 in which the dispersed phase is not contained, "-" was placed in the "Dispersed phase particle size" column and the "Average aspect ratio" column.

In the sintered bodies in all the Examples, the Vickers hardness was 12.3 GPa or less, and the total light transmittance was 20% or less.

In the sintered bodies in the Examples, the Vickers hardness and the total light transmittance are lower than those of the sintered bodies in Comparative Example 1 in which the sintered body includes alumina and zirconia containing gadolinium and yttrium as stabilizing elements and in Comparative Example 2 in which the sintered body includes alumina and zirconia containing only yttrium as a stabilizing element. Specifically, the machinability is high, and the light shielding ability is also high. In the sintered bodies in the Examples, the Vickers hardness and the total light transmittance are lower than those in the sintered body in Comparative Example 3 in which the sintered body includes strontium and zirconia containing gadolinium and yttrium as stabilizers. In the sintered bodies in the Examples, the Vickers hardness is lower than that of the sintered bodies in Comparative Example 4 in which the gadolinium content is 3.5 mol% and in Comparative Example 5 in which the yttrium content is 3.0 mol%, and also the light shielding ability is ensured.

As can be seen from the above, the sintered bodies in the Examples have high machinability and good light shielding ability.

The present application is based on Japanese Patent Application (Patent Application No. 2022-158849) filed on September 30, 2022, the entire contents of which are hereby incorporated by reference. In addition, all references cited herein are incorporated in their entirety.

**Claims**

1. A sintered body comprising zirconia containing at least one stabilizing element, wherein a content of the least one stabilizing element is less than 3.0 mol%, and wherein the sintered body has a peak at $2\theta = 34.0°\pm0.2°$ in an XRD pattern.

2. The sintered body according to claim 1, wherein the least one stabilizing element includes at least one selected from yttrium, gadolinium, ytterbium and erbium.

3. The sintered body according to claim 1 or 2, wherein the least one stabilizing element includes yttrium and at least one selected from gadolinium, ytterbium and erbium.

4. The sintered body according to any of claims 1 to 3, wherein the ratio of an intensity at $2\theta = 30.0°\pm0.2°$ to a peak top intensity at $2\theta = 34.0°\pm0.2°$ in the XRD pattern is 10 or more and 1000 or less.

5. The sintered body according to any of claims 1 to 4, wherein the sintered body comprises aluminum and at least one selected from the group consisting of magnesium, calcium, strontium, barium, lanthanum, neodymium and samarium.

6. The sintered body according to any of claims 1 to 5, wherein the sintered body has a Vickers hardness of 12.3 GPa or less.

7. The sintered body according to any of claims 1 to 6, wherein the sintered body has a total light transmittance of 20% or less.

8. The sintered body according to any of claims 1 to 7, wherein the sintered body has a measured density of 5.4 g/cm$^3$ or more and 6.3 g/cm$^3$ or less.

9. The sintered body according to any of claims 1 to 8, wherein the sintered body comprises crystal particles of the zirconia and crystal particles of a dispersed phase, and wherein an average crystal particle size of the crystal particles of the zirconia is smaller than an average crystal particle size of the crystal particles of the dispersed phase.

10. The sintered body according to any of claims 1 to 9, wherein the sintered body comprises crystal particles of a dispersed phase, and wherein the crystal particles of the dispersed phase have an average aspect ratio of 1.5 or more and 3.5 or less.

**EP 4 596 520 A1**

## INTERNATIONAL SEARCH REPORT

| International application No. |
| --- |
| **PCT/JP2023/035426** |

| A. | CLASSIFICATION OF SUBJECT MATTER |
| --- | --- |

*C04B 35/486*(2006.01)i
FI:  C04B35/486

According to International Patent Classification (IPC) or to both national classification and IPC

| B. | FIELDS SEARCHED |
| --- | --- |

Minimum documentation searched (classification system followed by classification symbols)

    C04B35/486

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2017-105689 A (TOSOH CORP) 15 June 2017 (2017-06-15) | 1-2, 4-6, 8 |
| |     paragraphs [0020]-[0021], [0084]-[0118], fig. 1-13 | |
| A | | 3, 7, 9-10 |
| A | JP 2016-30717 A (TOSOH CORP) 07 March 2016 (2016-03-07) | 1-10 |
| |     entire text, all drawings | |
| A | JP 61-117155 A (TOYO SODA MFG CO LTD) 04 June 1986 (1986-06-04) | 1-10 |
| |     entire text, all drawings | |
| A | JP 2017-516741 A (INNOVNANO-MATERIAIS AVANCADOS, SA.) 22 June 2017 (2017-06-22) | 1-10 |
| |     entire text, all drawings | |
| A | JP 2021-127285 A (DAIICHI KIGENSOKAGAKU KOGYO CO) 02 September 2021 (2021-09-02) | 1-10 |
| |     entire text | |
| A | CN 109400150 A (JIANGXI SAICI MAT CO LTD) 01 March 2019 (2019-03-01) | 1-10 |
| |     entire text | |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 November 2023** | **28 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

19

## INTERNATIONAL SEARCH REPORT

| International application No. |
| --- |
| **PCT/JP2023/035426** |

### C. DOCUMENTS CONSIDERED TO BE RELEVANT

| Category* | Citation of document, with indication, where appropriate, of the relevant passages | Relevant to claim No. |
| --- | --- | --- |
| A | CN 109956747 A (SHANDONG SINOCERA FUNCTIONAL MAT CO LTD) 02 July 2019 (2019-07-02)<br>whole document | 1-10 |
| P, A | JP 2022-162546 A (TOSOH CORP) 24 October 2022 (2022-10-24)<br>entire text, all drawings | 1-10 |
| P, A | JP 2023-126191 A (TOSOH CORP) 07 September 2023 (2023-09-07)<br>entire text, all drawings | 1-10 |

Form PCT/ISA/210 (second sheet) (January 2015)

# EP 4 596 520 A1

## INTERNATIONAL SEARCH REPORT
### Information on patent family members

International application No.

**PCT/JP2023/035426**

| Patent document cited in search report | | | Publication date (day/month/year) | Patent family member(s) | | | Publication date (day/month/year) |
|---|---|---|---|---|---|---|---|
| JP | 2017-105689 | A | 15 June 2017 | US | 2017/0349494 | A1 | |
| | | | | paragraphs [0032]-[0033], [0123]-[0157], table 2, fig. 1-13 | | | |
| | | | | WO | 2016/114265 | A1 | |
| | | | | EP | 3252023 | A1 | |
| | | | | CN | 107108374 | A | |
| JP | 2016-30717 | A | 07 March 2016 | (Family: none) | | | |
| JP | 61-117155 | A | 04 June 1986 | (Family: none) | | | |
| JP | 2017-516741 | A | 22 June 2017 | US | 2016/0368826 | A1 | |
| | | | | whole document, whole drawing | | | |
| | | | | WO | 2015/145354 | A1 | |
| | | | | EP | 3122701 | A1 | |
| | | | | CN | 106170465 | A | |
| JP | 2021-127285 | A | 02 September 2021 | (Family: none) | | | |
| CN | 109400150 | A | 01 March 2019 | (Family: none) | | | |
| CN | 109956747 | A | 02 July 2019 | US | 2021/0139378 | A1 | |
| | | | | whole document | | | |
| | | | | WO | 2020/224030 | A1 | |
| JP | 2022-162546 | A | 24 October 2022 | US | 2022/0332649 | A1 | |
| | | | | whole document, whole drawing | | | |
| | | | | EP | 4074673 | A1 | |
| | | | | CN | 115196962 | A | |
| | | | | KR | 10-2022-0141250 | A | |
| JP | 2023-126191 | A | 07 September 2023 | WO | 2023/163205 | A1 | |

Form PCT/ISA/210 (patent family annex) (January 2015)

**EP 4 596 520 A1**

**Patent documents cited in the description**

- JP 2015127294 A

- JP 2022158849 A